# EUROPEAN PATENT APPLICATION

(11) **EP 3 176 480 A1**
(43) Date of publication of application: **07.06.2017**
(21) Application number: 16382289.3
(22) Date of filing: 22.06.2016
(51) Int. Cl.: F16K 31/383, F16K 31/40, F16K 1/36, F16K 31/06, F02B 37/16

(54) **SOLENOID VALVE FOR RELEASING FLUID PRESSURE**

(30) Priority: 03.12.2015 ES 201531756
(71) Applicant: Bitron Industrie Espana, S.A., 08930 Barcelona (ES)
(72) Inventor: MONTALVO MONTALVO, RAUL, 08930 BARCELONA (ES); FERNANDEZ SALAZAR, SERGI, 08930 BARCELONA (ES)
(74) Representative: Isern-Jara, Nuria

(57) **Abstract**

Solenoid valve (1) for releasing fluid pressure, provided for a turbo system of a combustion engine, which comprises a moving core that can be displaced relative to a stationary core, one end of the moving core being linked to stoppage means that act upon an inlet port (IP) and an outlet port (OP). Additionally, an additional chamber (15) is connected to the inlet port (IP) through a passage made that crosses a stopper (6), the moving core being provided with closure means, such that in a closed position of the stoppage means and the closure means the pressure value in the additional chamber is equal to or higher than the pressure value in the inlet port (IP) and in a second intermediate position where the stoppage means remain closed while the closure means allow communication between the additional chamber (15) and the outlet port (OP) through a second passage that connects the additional chamber to the outlet port (OPr).

## Description

### DESCRIPTION

### OBJECT OF THE INVENTION

The object of the present application is the registration of a solenoid valve for releasing fluid pressure, especially provided for a turbo system of a combustion engine for vehicles and the like.

### BACKGROUND OF THE INVENTION

Utility model No. ES 1074912 is known, and describes a solenoid valve provided for the release of a pressurized fluid in a turbo system of an internal combustion engine.

This solenoid valve has a chamber that can take advantage of the pressure to perform the opening and closing of large passage sections, such that it reduces the size of the coil to be used. For this purpose, a sealing membrane of an elastomeric material is used, which functions as a stopper and a carrier of moving elements.

However, it has been proven in practice that there might be problems of expansion and/or degradation of the material of the membrane, due to the high temperatures and pressures to which the solenoid valve is subjected during operation.

Patent No. ES 425690 is also well known, and describes a differential solenoid valve provided for fluid control, comprising a body that includes a passage between an annular external chamber, which is connected to a fluid inlet, and a pilot chamber that is obtained by an axial conduit eccentrically situated outside of the intermediate, flexible annular portion of a membrane of elastomeric material housed inside the body of the solenoid valve. However, said prior art would also have the same disadvantages that have been discussed above.

The document US 201313134339 also refers to an electromagnetic valve that has a fluid inlet and outlet chamber whose separation between the two is made through an elastically deformable diaphragm.

Finally, the British patent GB 1092753, which describes an electrically operated fluid-flow control device, is also known in the state of the art. However, it does not have an additional chamber connected to the inlet port through a passage made in a stopper, having an additional chamber provided with additional closure means.

### DESCRIPTIONOF THE INVENTION

The present invention has been developed with the aim of providing a solenoid valve that constitutes a novelty within the field of application, and solves the disadvantages mentioned above while also contributing other additional advantages, which will become evident from the description provided below.

It is therefore an object of the present invention to provide a solenoid valve for releasing fluid pressure, especially provided for a turbo system of a combustion engine for vehicles and the like, comprising an electrically powered coil that acts upon the displacement of a moving core along a through-hole in a housing body relative to a stationary core, one of the ends of the moving core being linked to stoppage means that act upon an inlet port and an outlet port, the stoppage means having a stopper.

In particular, the invention is characterised by the fact that a defined additional chamber is provided, which is in fluid communication with the inlet port through at least one passage made that crosses the stopper, the moving core being provided with closure means that act upon the passage, such that in a closed position of the stoppage means and the closure means the pressure value in the additional chamber is equal to or higher than the pressure value in the inlet port and in a second intermediate position wherein the stoppage means remain closed while the closure means allow fluid communication between the additional chamber and the outlet port through a second passage that connects the additional chamber to the outlet port, the stopper and the closure means being axially aligned.

Due to these characteristics, the assembly of a solenoid valve with the aim described above is simplified compared to the known state of the art, such that the sealing membrane is removed, thereby reducing the total weight of the solenoid valve as well. As a result, there is less of a chance that the solenoid valve will have a malfunction due to high temperature values that can act upon the membrane because of the type of material commonly used, which is sensitive to the temperature values that can be found in the interior of a combustion engine.

According to another aspect of the invention, the stopper comprises a body with an essentially cylindrical shape that has an area susceptible of coming into contact with the inlet port (IP) and a transversal area that has a contact area with the first closure means, and a central elongated extension wherein the second passage is located longitudinally.

Other characteristics and advantages of the solenoid valve, object of the present invention, will become clear in light of the description of a preferred, though non-exclusive, embodiment, which, by way of a non-limiting example, is illustrated in the accompanying drawings, wherein:

### BRIEF DESCRIPTIONOF THE DRAWINGS

Figure 1 is a longitudinal cross-sectional view of a solenoid valve according to the invention in a closed position, such that the valve blocks the passage that communicates the chamber with the outlet port;
Figure 2 is a longitudinal cross-sectional view of the solenoid valve shown in figure 1 in an intermediate position, wherein the stoppage means prevent communication between the inlet port and the outlet port, while allowing fluid communication with the inlet port through the passage made that crosses the stopper; and

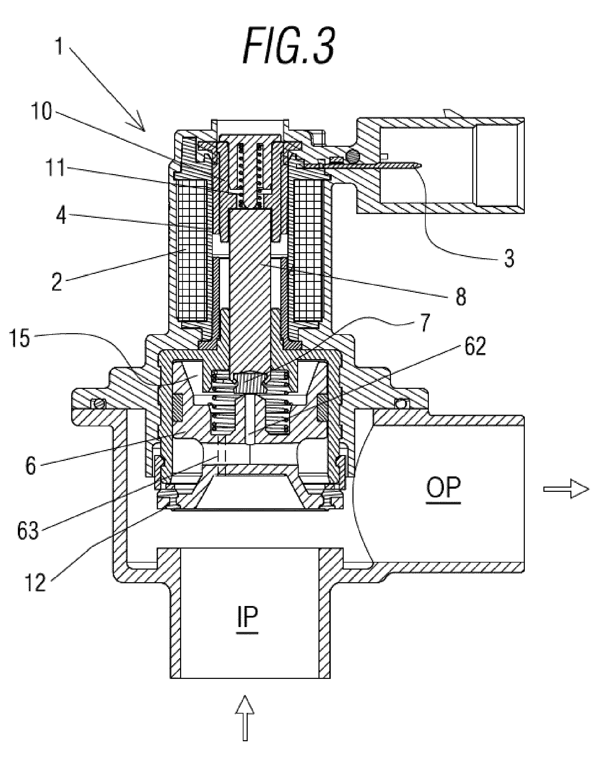

Figure 3 is a longitudinal cross-sectional view in an open position wherein the shaft has been displaced upwards, allowing passage between the inlet port and the outlet port.

### DESCRIPTIONOF A PREFERRED EMBODIMENT

In light of the aforementioned figures and in accordance with the adopted numbering, one may observe therein an example of a preferred embodiment of the invention, which comprises the parts and elements that are indicated and described in detail below.

As is shown, the solenoid valve for releasing fluid pressure, generally indicated with the reference (1), especially provided for a turbo system of a combustion engine for vehicles and the like, comprises a coil (2) electrically powered by connectors (3), and is housed in a coil-holder (4), said coil (2) acting upon the displacement of a moving core along a through-hole in the interior of a housing body (5) relative to a stationary core (10). One of the ends of the moving core is linked to stoppage means that act upon an inlet port (IP) and an outlet port (OP) provided for the circulation of a flow in the direction indicated with arrows (A), the stoppage means having a stopper (6) as will be explained in detail below. It should be mentioned that the inlet port (IP) is arranged on a plane that is perpendicular to the position of the output port (PE).

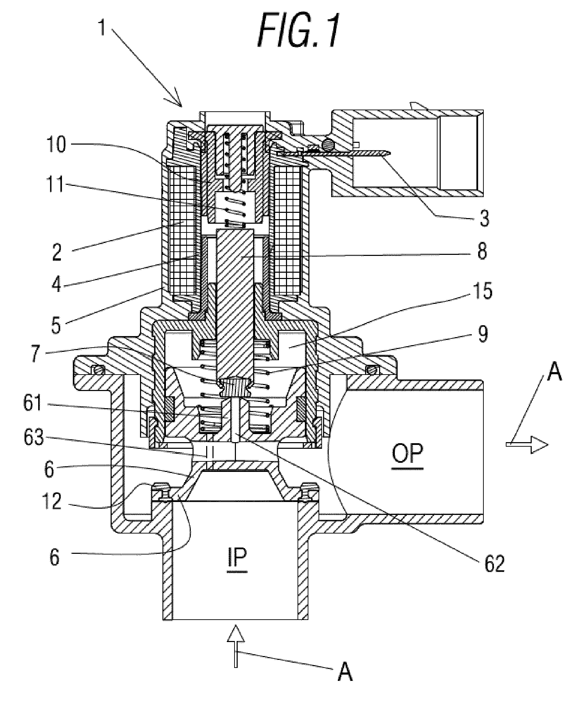

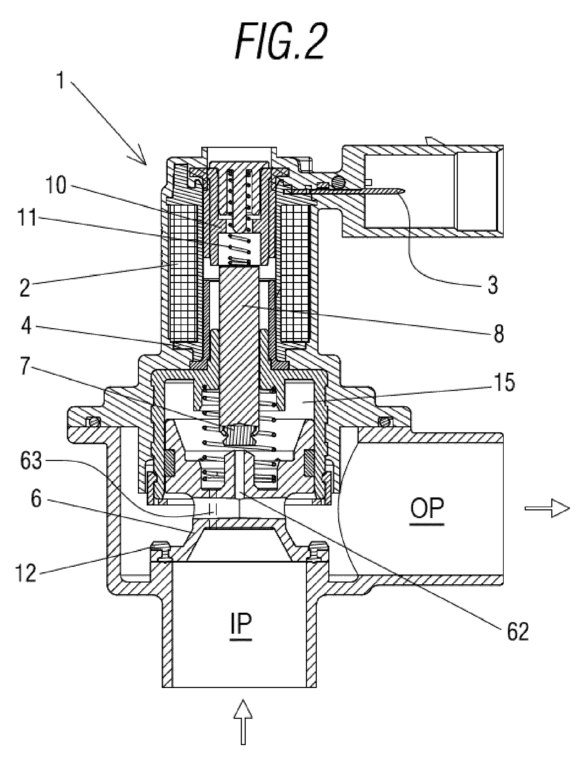

Additionally, an additional chamber (15) is provided, which is in fluid communication with the inlet port (IP) through at least one passage (63) (indicated in the drawings with dashed lines) that crosses the stopper (6), the moving core being provided with closure means that act upon the passage, such that in a closed position of the solenoid valve (see figure 1) of the stoppage means and the closure means the pressure value in the additional chamber is equal to or higher than the pressure value of the inlet port (maintaining a state of equilibrium) and in a second intermediate position (see figure 2) wherein the stoppage means remain closed while the closure means allow fluid communication between the additional chamber and the outlet port through a second passage (62) that connects the additional chamber to the outlet port (OP), the stopper and the closure means being axially aligned. With regard to the closure means, they consist of a valve piece (7) coupled to the lower end of the mobile shaft (8) by snap-fitting.

Now with particular reference to the stopper (6), it comprises a body with an essentially cylindrical shape having a flange-shaped area (60) susceptible of coming into contact with the inlet port (IP) and a transversal area having a contact area with the first closure means, and an elongated central extension (61) wherein the second passage (62) is located longitudinally. An annular sealing gasket (12) is provided in the flange-shaped area (60) in contact with the inlet port (IP), which, in a closed position, abuts the lateral walls defined by the inlet port (IP) and can also act as a noise-muffling element to reduce the level of noise when the stopper comes into contact with the inlet port (IP) when there is contact between metal and/or plastic with an element of elastomeric material.

The solenoid valve (1) comprises first elastic means linked to the shaft (8) that are part of the moving core and the stoppage means, constituted by a helical spring (9) that partially envelops the shaft (8), such that in the closed position of the solenoid valve, said helical spring (9) is in a fully extended state.

Furthermore, the solenoid valve (1) also comprises second elastic means linked to the shaft (8) that are part of the moving core and the closure means, these second elastic means being made up of a helical spring (11) such that the second elastic means are in an extended state when the solenoid valve remains in its closed state.

In one embodiment of the invention that is not shown, it would be possible to remove helical spring (9) and adapt the dimensions of helical spring (11) according to the operational needs of the solenoid valve (1).

Optionally, the stopper (6) of the solenoid valve (1) can incorporate a filter (not shown) that prevents unwanted small solid particles from entering into the solenoid valve, thereby preventing unwanted damage or obstruction over time.

The details, shapes, dimensions and other accessory elements used to manufacture the solenoid valve of the invention may be suitably substituted for others which do not diverge from the scope defined by the claims included below.

## Claims

1. A solenoid valve (1) for releasing fluid pressure, especially provided for a turbo system of a combustion engine for vehicles and the like, comprising an electrically powered coil that acts upon the displacement of a moving core along a through-hole in the interior of a housing body relative to a stationary core, one of the ends of the moving core being linked to stoppage means that act upon an inlet port (IP) and an outlet port (OP) for the circulation of the fluid, these stoppage means having a stopper (6), **characterised by** the fact that an additional chamber (15) is provided, which is in fluid communication with the inlet port (IP) through at least one passage made that crosses the stopper (6), the moving core being provided with closure means that act upon the passage, such that the pressure value in the additional chamber (15) in a closed position of the stoppage means and the closure means is equal to or higher than the pressure value in the inlet port (IP) and in a second intermediate position wherein the stoppage means remain closed while the closure means allow fluid communication between the additional chamber (15) and the outlet port (OP) through a second passage that connects the additional chamber to the outlet port (OP), the stopper (6) and the closure means being axially aligned.

2. The solenoid valve (1) for releasing fluid pressure according to claim 1, **characterised by** the fact that it comprises first elastic means linked to a shaft (8) that is part of the moving core and the stoppage means, such that in the closed position the first elastic means are in an extended state.

3. The solenoid valve (1) for releasing fluid pressure according to claim 1, **characterised by** the fact that it comprises second elastic means linked to a shaft that is part of the moving core and the closure means, such that the second elastic means are in an extended state when the solenoid valve remains in a extended state.

4. The solenoid valve (1) for releasing fluid pressure according to claim 1, **characterised by** the fact that the stopper (6) comprises a body with an essentially cylindrical shape having an area susceptible of coming into contact with the inlet port (IP) and a transversal area having a contact area with the first closure means, and an elongated extension wherein the second passage is located longitudinally.

5. The solenoid valve (1) for releasing fluid pressure according to claim 1, **characterised by** the fact that the contact area between the stopper (6) and the inlet port (IP) includes noise-muffling means.

6. The solenoid valve (1) for releasing fluid pressure according to claim 5, **characterised by** the fact that the stopper (6) has noise-muffling means.
